# EUROPÄISCHE PATENTSCHRIFT

(11) **EP 2 505 337 B1**
(45) Veröffentlichungstag und Bekanntmachung des Hinweises auf die Patenterteilung: **19.08.2020**
(21) Anmeldenummer: 12159587.0
(22) Anmeldetag: 15.03.2012
(51) Int. Cl.: B29C 65/02, B29C 65/78, B65B 7/02, B65B 43/46, B65B 51/14, B65B 51/30, B29C 65/08, B29C 65/48, B29C 65/74, B29K 23/00

(54) **Verfahren zum Querschweißen von Kunststoffschläuchen und Vorrichtung zum Formen und Schließen von Säcken**
Method for transverse welding of plastic hoses and device for forming and closing sacks
Procédé de soudage transverse de tuyaux souples en matière plastique et dispositif de formation et de fermeture de sacs

(30) Priorität: 29.03.2011 DE 102011015491
(43) Veröffentlichungstag der Anmeldung: 03.10.2012
(73) Patentinhaber: Windmöller & Hölscher KG, 49525 Lengerich/Westf. (DE)
(72) Erfinder: Große-Heitmeyer, Rüdiger, 49492 Westerkappeln (DE); Voß, Hans-Ludwig, 49545 Tecklenburg (DE)

(56) Entgegenhaltungen:
- EP-A1- 0 718 196
- EP-A1- 1 655 229
- WO-A1-93/21001
- CA-A- 914 048
- DE-A1- 2 612 959
- DE-A1- 2 621 799
- FR-A- 1 397 917
- GB-A- 2 015 424
- US-A- 2 200 971
- US-A- 3 287 199
- US-A- 3 553 059

## Beschreibung

Die Erfindung betrifft ein Verfahren zum Querschweißen von Kunststoffschläuchen und eine Vorrichtung zum Formen und Schließen von Säcken. Es sind verschiedene Verfahren zur Sackproduktion bekannt, bei denen von einem Kunststoffschlauch ausgegangen wird und Querschweißnähte in den Schlauch oder in die Schlauchstücke eingebracht werden.

Zu diesen Sackherstellverfahren zählen auch Verfahren zur Herstellung und Befüllung derselben. Maschinen, die verschließbare und verschlossene Verpackungsmittel wie Säcke herstellen und befüllen, werden FFS-Maschinen (Form, Fill and Seal-Maschinen) genannt. Jedoch sind die Arbeitsweise und die Leistungsfähigkeit dieser Maschinen in den verschiedenen Technikbereichen sehr unterschiedlich. Wenn als Ausdruck von Leistungsfähigkeit die Menge und die Masse der pro Zeiteinheit hergestellten und befüllten Verpackungsmittel herangezogen wird, dann nehmen in diesem Zusammenhang FFS-Maschinen zur Abfüllung von industriellen Schüttgütern, wie sie in der DE 10 2004 034 489 A1, der EP 1 201 539 B1 oder der EP 1 623 926 A2 beschrieben werden, eine führende Rolle ein.

Mit derartigen Maschinen ist es möglich, mehr als 2.000 Säcke in der Stunde mit granulatartigem Schüttgut zu befüllen und die Säcke zu verschließen. Viele dieser Säcke wiegen 25 kg und mehr. Die vorgenannten FFS-Maschinen führen in der Regel folgende Verfahrensschritte zur Bildung, Befüllung und zum Verschließen der Säcke durch:
- flachgelegtes schlauchförmiges Kunststoffmaterial, das eine Hauptsymmetrieachse und zwei dazu parallele Schlauchränder aufweist, wird in Richtung der Hauptsymmetrieachse des Schlauches von einer Rolle abgewickelt;
- das schlauchförmige Material wird durch einen Schweiß- und Trennvorgang mit einer ersten zur Schlauchachse senkrechten Querschweißnaht versehen und entlang einer parallel zu dieser Querschweißnaht verlaufenden Trennlinie getrennt, so dass einseitig offene vereinzelte Schlauchstücke entstehen;
- die einseitig offenen Schlauchstücke werden in der Abfüllstation mit der Schwerkraft durch ihr noch offenes Ende mit einem Füllmaterial befüllt,
- das noch offene Ende der einseitig offenen Schlauchstücke wird mit einer zweiten Schweißnaht, die ebenfalls senkrecht zur Schlauchachse verläuft, versehen.

Zu den Charakteristika dieser Maschinen zählt der erwähnte Querschweißvorgang, bei dem Schweißbacken Verwendung finden und bei dem oft eine Querschweißnaht ausgeprägt wird, die über die gesamte Breite des Schlauches beziehungsweise des Schlauchstückes reicht.

In jüngerer Zeit werden unter anderem in der Sackproduktion Kunststoffmaterialien verwendet, die verstreckt oder gereckt sind. Bei diesen Materialien wird entweder direkt nach ihrer Extrusion (verstrecken) oder später (recken) ein Auseinanderziehen des Kunststoffmaterials vorgenommen. Dieser Vorgang führt später bei dem später erkalteten Material in der "Ziehrichtung" zu großer Zugfestigkeit, was bedeutet, dass mit weniger Verpackungsmaterial die gleiche Menge an Säcken hergestellt werden kann. Zu diesen (Kunststoff-)Materialien gehört zunächst das ganze klassische Folienmaterial unter Einschluss der Polyolefine, da diese Materialien oft unter Einbringung von Reckverhältnissen (z.B. im Blas- oder Giesfolienverfahren) hergestellt werden. Die Effekte des Reckens oder Verstreckens sind insbesondere bei Polyalkylen, wie Polyethylen oder Polypropylen ausgeprägt.
In jüngerer Zeit gewinnt die so genannte MDO-Folie (Machine Direction Orientation), also Folie, die nach ihrer Extrusion von einem speziellen Reckwerk gereckt wird, an Boden. Als sehr stark gerecktes Material ist in diesem Zusammenhang auch Gewebe aus gerecktem Polyolefinmaterial zu nennen. Ebenfalls in jüngerer Zeit wird auch Vliesmaterial zur Sackproduktion verwendet. Auch bei den Vliesfasern selber liegen oft hohe Reckbeziehungsweise Verstreckverhältnisse vor. Dies gilt natürlich auch, wenn Materialien Verwendung finden, die Schichten aus verschiedenen Materialien aufweisen (z. B. Laminate aus Folien und Gewebe, beschichtetes Gewebe, Folie und Vlies usw.). Den genannten Materialien ist gemein, dass sie künstlich hergestellt sind und dass sie zur Sackherstellung ähnlich wie Folien genutzt werden. Daher werden die Begriffe Kunststoff und Folie in dieser Druckschrift auch häufig synonym gebraucht.

Bedauerlicherweise zeigt die Erfahrung, dass sich gerade bei Materialien, die eine starke Reckung oder Verstreckung erfahren haben, Querschweißnähte befriedigender Qualität schwer herstellen lassen.

Die US 3 553 059 zeigt eine Vorrichtung und ein Verfahren zum Verschweißen von Kunststofffolien, wobei zunächst die zu verschweißenden Folien beidseits eines Schweißelements eingeklemmt werden und wobei anschließend die Schweißung erfolgt.

Die DE 26 12 959 A1 offenbart eine Maschine zum Herstellen, Füllen und Verschließen von Schlauchbeuteln, wobei beidseits eines Trennschnittes eines Schlauches eine Kopf- bzw. Bodennaht angebracht wird. Dabei wird mittels Klemmbacken zunächst der Schlauch geklemmt und anschließend geschnitten. Nach dem Schneiden erfolgt zwischen den Klemmbacken und der Schnittstelle die Anlage von Schweißbacken, welche den Schlauch nun mit einer Querschweißnaht versehen.

Die EP 0 718 196 A1 offenbart eine Vorrichtung zum Verschweißen einer Schlauchbahn, wobei zwei Schweißbackenpaare vorgesehen sind, welche sich während des Schweißvorgangs mit einer Relativgeschwindigkeit zueinander bewegen, so dass das Packgut besser in den von der Schlauchbahn umschlossenen Raum hineinrutscht.

Die CA 194 048 A offenbart eine Schweißvorrichtung, wobei oberhalb und unterhalb der Schweißbacken jeweils Klemmbackenpaare vorgesehen sind, welche auf die Schweißbacken zu bewegt werden. Damit wird die Bahnspannung in der Umgebung der Schweißung reduziert.

Die GB 2 015 424 A offenbart ein Verfahren zum Schweißen einer Folie, wobei zunächst ein Schweißbalken abgesenkt wird, um einen längeren Bahnweg zu schaffen. Anschließend wird mit zwei Klemmbackenpaaren rechts und links des Schweißbalkens die Folie fixiert und das Schweißen durchgeführt.

Die FR 1 397 917 A offenbart eine Verpackungsvorrichtung, bei der ein offenes Schlauchende zunächst von zwei Seiten mittels zweier Klemmelementepaare zusammen gedrückt wird, wobei die zwischen diesen Klemmelementepaaren liegenden Folienbereiche durch einen federgelagerten Stempel nach oben gedrückt werden. Die Schweißbacke wird anschließend auf diesen Stempel abgesenkt und drückt diesen nach unten, so dass die Bahnspannung der Folie reduziert wird.

Die DE 26 21 799 A1 offenbart eine Vorrichtung, deren Funktion mit der Vorrichtung gemäß der FR 1 397 917 A vergleichbar ist. Ein wesentlicher Unterschied ist, dass anstelle der Klemmelementepaare Sauger vorgesehen sind, welche die Folienbahn fixieren.

Die EP 1 655 229 A1 und die WO 93/21001 A1 offenbaren Vorrichtungen, die mit der Vorrichtung und dem Verfahren gemäß der FR 1 397 917 A vergleichbar sind.

Auch die US 2 200 971 A und die US 3 287 199 A sind in Hinblick auf die vorliegende Erfindung mit der FR 1 397 917 A vergleichbar.

Daher besteht die Aufgabe der vorliegenden Erfindung darin, ein Verfahren zum Querschweißen von Kunststoffschläuchen und eine Vorrichtung zum Formen, Füllen und Verschließen von Säcken vorzuschlagen, mit denen sich Querschweißnähte guter Qualität bei hoher Fertigungsgeschwindigkeit herstellen lassen.
Die Aufgabe wird gelöst durch die Ansprüche 1 und 12.

Die vorliegende Erfindung schlägt im Wesentlichen vor, dass in die Kunststoffschlauchwegstrecke zwischen der Haltelinie und dem Ort, an dem die Querschweißnaht hergestellt wird, eine Lose eingebracht wird, bevor der Schweißprozess abgeschlossen ist.
In dem vorliegenden Zusammenhang ist eine Haltelinie eine Linie, die sich ausprägt, weil das spätere Schlauchmaterial gehalten wird. Die Haltemittel können zangenartig ausgeprägt sein, wobei oft zwei Balken die Kunststoffschlauchbahn über ihre Breite "in die Zange nehmen" werden. Eine andere Alternative besteht in der Verwendung von zumindest einer Walze, die an dem "In-die-Zange-Nehmen" beteiligt sein kann. Oft wird hierzu ein Walzenpaar, das auch als Vorzugswalzenpaar verwendet werden kann, eingesetzt werden. Die Haltemittel halten die Bahn in der Regel während des Schweißprozesses. Eine zusätzliche Haltefunktion kann jedoch auch von den Schweißbacken ausgeübt werden, während diese in Kontakt mit der Bahn stehen. In der Regel wird ein solcher Schweißprozess damit einhergehen, dass die Schweißbacken den Kunststoffschlauch in die Zange nehmen und dabei einen Temperatureintrag von außen auf den Schlauch vornehmen.

Die betreffende Wärmeenergie durchdringt in einer gewissen Zeitspanne das Kunststoffmaterial und bewirkt schließlich an der späteren Schweißstelle, an der die beiden Schlauchwandungen miteinander stoßen und zusammengedrückt werden, den gewünschten thermischen Fügeprozess.
Der letztgenannte Begriff "thermischer Fügeprozess" ist bewusst sehr vorsichtig gewählt worden:
Es ist gerade der Wärmeeintrag, der die eingangs geschilderten Qualitätseinbußen der Schweißnaht hervorruft. Aus diesem Grund kann die eigentliche Querschweißung auch nur eine Siegelung (die schon bei etwas geringeren Temperaturen zustande kommt) oder z. B. ein thermisch induzierter Klebeprozess sein (z. B. Hotmelt ist auf den Bereich der späteren Naht aufgetragen und wird durch die Wärme aktiviert). Alle denkbaren thermischen Fügeprozesse werden hier zunächst pauschalierend als "Schweißen" zusammengefasst.
Zu diesen thermischen Fügeprozessen gehört auch das Ultraschallschweißen, bei dem in der Regel eine Schwingung mit einer Frequenz im Ultraschallbereich an der "Schweißstelle" in Wärmeenergie umgesetzt wird und den thermischen Fügeprozess bewirkt.
Eine Lose ist für die Zwecke der vorliegenden Anmeldung ein Schlauchbahnabschnitt, der nicht der üblichen Bahnspannung unterliegt. Die übliche Bahnspannung wird in vielen Maschinen, die Kunststoffschläuche verarbeiten, von Vorzügen (oft Vorzugswalzenpaare) und Abwicklungen bestimmt. Dies ist auch bei den FFS-Maschinen nach den vorgenannten Druckschriften der Fall. Allerdings wird gerade bei diesen Maschinen die Bahnspannung im Bereich der Schweißnahterzeugung zunächst von der Erdbeschleunigung und dem Sackgewicht bestimmt, da das Schlauchende oder der Schlauchabschnitt unter den Schweißstationen frei hängen.

In dem Bereich zwischen den Vorzugswalzen und dem Ort, an dem die Querschweißnaht hergestellt wird, wird diese Bahnspannung quasi "eingefroren", nachdem die Schweißbacken in Kontakt mit der Kunststoffschlauchbahn gekommen sind und die Bahn durch ihre Zangenbewegung fixieren. Dies gilt erst recht, wenn irgendwelche weiteren Haltemittel in dem Bereich zwischen den Vorzugswalzen und den Schweißbacken auf die Bahn einwirken.

Eine Lose wird demzufolge eingebracht, wenn die erwähnte Bahnspannung - insbesondere bewusst - in dem Bereich zwischen irgendwelchen Haltemitteln und dem Wirkungsort der Schweißbacken herabgesetzt wird (hier Kunststoffschlauchwegstrecke zwischen der Haltelinie und dem Ort, an dem die Querschweißung eingebracht wird).
Dies kann in dem geschilderten speziellen Fall geschehen, indem die Abzugswalzen weiter Kunststoffschlauchmaterial fördern, wenn die Schweißbacken oder ein ihnen in Kunststoffschlauchtransportrichtung nachgelagertes Haltemittel bereits geschlossen sind. In diesem Fall entsteht die Lose, da das in den abgegrenzten Bereich geförderte Material in Folge der andauernden Förderung eine größere Länge hat als die Wegstrecke zwischen den Haltemitteln und dem Wirkungsort der Schweißbacken. Eine weitere Alternative oder Ergänzung kann in diesem Zusammenhang darin bestehen, neben dem Haltemittel, das in der Schlauchfolienbahntransportrichtung den Schweißbacken vorgelagert ist, noch ein weiteres den Schweißbacken nachgelagertes Haltemittel vorzusehen. Auch ein Schließen des letzten nachgelagerten Haltemittels kann die Bahnspannung - insbesondere wenn noch Schlauchfolienmaterial gefördert wird - herabsetzen.

Alternativ oder ergänzend kann die Wegstrecke zwischen den den Schweißbacken vorgelagerten Haltemitteln und den Schweißbacken verringert werden. Hierzu kann eine Relativbewegung zwischen den Schweißbacken und den Haltemitteln vorgenommen werden. Eine zweite Möglichkeit zur Verringerung der für den Kunststoffschlauch kürzest möglichen Wegstrecke besteht in der Änderung der Position von Kunststoffschlauchleitelementen, die eine kürzere Wegstrecke freigibt und so eine Lose schafft.

Es ist vorteilhaft, wenn die in dieser Druckschrift beschriebenen und beanspruchten Verfahren durchgeführt werden, indem die Steuervorrichtung zu ihrer automatischen Abarbeitung eingerichtet wird. Dies kann durch das Programmieren der Steuervorrichtung geschehen.

Weitere Ausführungsbeispiele der Erfindung gehen aus der gegenständlichen Beschreibung und den Ansprüchen hervor.
Die einzelnen Figuren zeigen:
- Fig. 1: Die Seitenansicht einer FFS-Maschine
- Fig. 2: Eine erste Querschweißstation in einer ersten Arbeitssituation
- Fig. 3: Die erste Querschweißstation in einer zweiten Arbeitssituation
- Fig. 4: Die erste Querschweißstation in einer dritten Arbeitssituation
- Fig. 5: Die erste Querschweißstation in einer vierten Arbeitssituation
- Fig. 6: Eine zweite Querschweißstation
- Fig. 7: Eine dritte Querschweißstation
- Fig. 8: Eine vierte Querschweißstation
- Fig. 9: Eine fünfte Querschweißstation

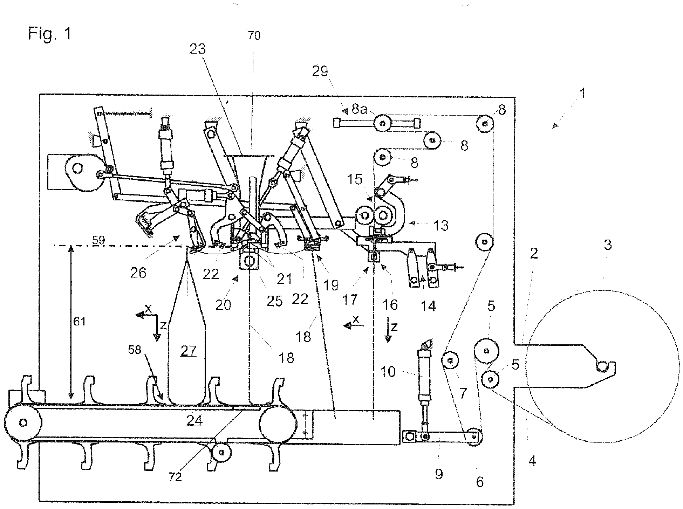

Die Figur 1 zeigt eine FFS-Maschine, die zum Formen, Füllen und Schließen von Säcken geeignet ist und auf die sich die Lehre der vorliegenden Druckschrift vorteilhaft anwenden lässt. Diese Vorrichtung 1 umfasst einen Tragarm 2, auf welchem ein Wickel 3 mit schlauchförmiger Folie 4 aufliegt. Die schlauchförmige Folie 4 weist in Figur 1 nicht dargestellte Seitenfalten 41 auf. Die Transportwalzen 5, die zum Teil auch angetrieben sein können, sorgen für eine in der Regel kontinuierliche Abwicklung der schlauchförmigen Folie 4. Der durch eine Kolben-Zylinder-Einheit 10 mit einer Last beaufschlagte Hebel 9, welcher eine Umlenkwalze 6 trägt und insgesamt häufig als Tänzereinrichtung bezeichnet wird, und die Transportwalze 7, 8 und das Vorschubrollenpaar 15 sorgen insgesamt auf an sich bekannte Weise dafür, dass die schlauchförmige Folie 4 auf ihrem weiteren Transportweg taktweise intermittierend weiterbewegt wird. Die Transportwalze 8a ist Bestandteil einer Registervorrichtung 29, mit welcher die Länge des Transportweges der schlauchförmigen Folie 4 an das Format der späteren Säcke angepasst werden kann. Dazu ist die Transportwalze 8a relativ zur Vorrichtung 1 verschieblich angeordnet. Zum Verschieben steht ein händisch oder elektromotorisch betriebener und an sich bekannter Spindeltrieb zur Verfügung.

Mit dem Vorschubrollenpaar 15 wird die schlauchförmige Folie 4 durch die Schweißbacken 33 einer Querschweißstation 13 und durch eine Querschneidestation 16 hindurch geschoben. Die Werkzeuge der Querschweißstation 13 und der Querschneidestation 16 können auf nicht näher beschriebene Weise, beispielsweise durch eine Parallelogrammanordnung 14, in Ebenen orthogonal zur Vorschubrichtung der schlauchförmigen Folie 4 auf diese zu und von dieser weg bewegt werden. Nachdem die Greifer 17 die schlauchförmige Folie 4 ergriffen haben, wird oberhalb der Greifer 17 ein Schlauchstück 18 in der Querschneidestation 16 von der schlauchförmigen Folie 4 abgetrennt. Zeitgleich wird oberhalb der Schnittkante an der schlauchförmigen Folie 4 in der Querschweißstation 13 eine Querschweißung 42 angebracht, weiche den Boden oder die Kopfseite des im nächsten Arbeitstakt der Vorrichtung 1 zu bildenden Schlauchstücks 18 darstellt. Dementsprechend werden in der Querschweißstation 13 Kopfnähte erzeugt. Allgemein kann die Herstellung der Kopf- oder Bodennähte jedoch nicht nur, auch wenn vorzugsweise, durch eine Querschweißung erfolgen, sondern es sind auch weitere Fügeverfahren, etwa das Kleben, denkbar.

Die Greifer 17 befördern das Schlauchstück 18 zu einem Übergabepunkt, an dem weitere Greifer 19 das Schlauchstück 18 erfassen und zu einer Füllstation 20 transportieren. Dort wird das Schlauchstück 18 an stationäre Greifer 21 übergeben und von den Saugern 22 geöffnet, so dass das Füllgut, welches durch den Füllstutzen 23 geleitet wird, in das Schlauchstück 18 gelangen kann. Das Schlauchstück 18 liegt dabei mit seinem unteren Ende auf einem Transportband 24 auf, so dass das Schlauchstück 18 während des Befüllvorganges nicht übermäßig entlang seiner Längskanten belastet wird. Weitere Greifer 25 befördern das befüllte Schlauchstück zur Kopf- oder Bodennahtschweißstation 26, in der das Schlauchstück 18 mit einer Kopf- bzw. Bodenschweißnaht verschlossen wird und so einen fertigen Sack 27 bildet. Auch das Verschließen des Schlauchstücks 18 in seinem Kopfbereich kann durch ein anderes Fügeverfahren erfolgen. Der fertige Sack 27 wird von dem Transportband 24 aus der Vorrichtung 1 heraus geführt. Hierbei ist der Sack 27 in der Regel sehr viel höher (in y-Richtung) als breit (in x-Richtung).

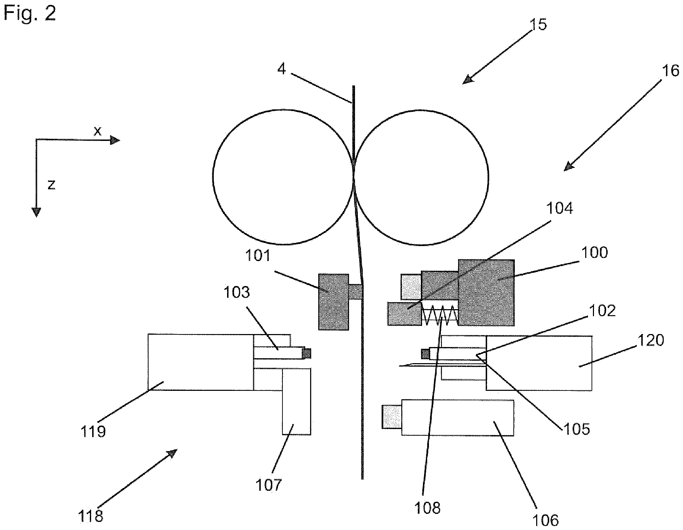

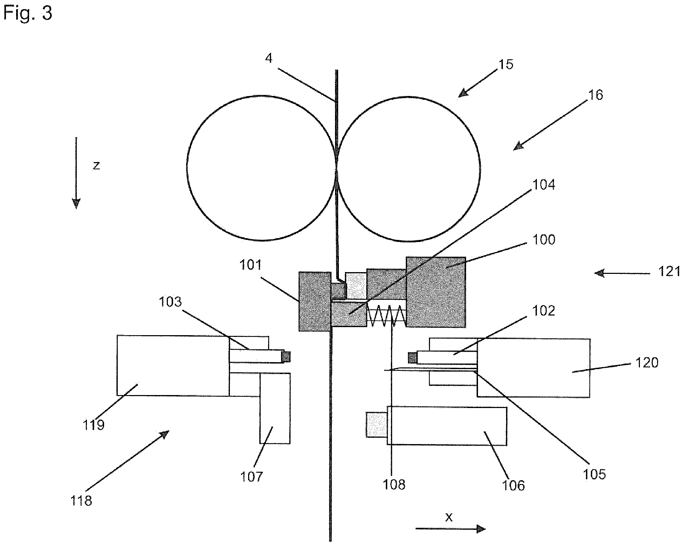

Figur 2 zeigt eine Querschweißstation 16, die gleichzeitig auch eine Kunststoffbahn oder Schlauchfolienbahn 4 quer trennen kann. Eine solche Station kommt oft in FFS-Maschinen zum Einsatz. Die Kunststoffbahn 4 kann durch ein Vorzugswalzenpaar 15 in der Bahnlaufrichtung z gefördert werden. Nach dem Vorzugswalzenpaar 15 kommt die Bahn in den Arbeitsbereich der Haltemittel 100, 101, die einen beweglichen Teil 100 und eine Gegenlage 101 aufweisen. In dem gezeigten Ausführungsbeispiel ist auch ein Kunststoffschlauchleitelement 104 über die Haltestange mit Spiralfeder 108 an dem beweglichen Teil 100 der Haltemittel angebracht. Die Funktion dieser Vorrichtungsbestandteile wird weiter unten erklärt.
In der Kunststoffschlauchtransportrichtung z folgen auf die in Kunststoffschlauchtransportrichtung z ersten Haltemittel 100, 101 die Schweißbacken 102 und 103, die jeweils an einen der Werkzeugträger 119 und 120 angelenkt sind und mit diesen Bestandteilen die Schweißvorrichtung 118 bilden. An dem Werkzeugträger 120 ist auch das Messer 105 angebracht, während der Werkzeugträger 119 den aktiven Teil 106 eines weiteren Haltemittels 107, 106 trägt, die 107, 106 auch noch die Gegenlage 107 des Haltemittels umfassen. Die Funktion all dieser Elemente wird nun mit Blick auf die Figuren 3 bis 5 erklärt, die eine Abfolge von Arbeitsschritten der beschriebenen Station 15 zeigen.
In Figur 3 ist eine Arbeitssituation zu sehen, in der der bewegliche Teil 100 der Haltemittel 100, 101 eine Bewegung entlang des Pfeiles 121 ausgeführt hat, so dass die Folie 4 durch die Haltemittel 100, 101 gehalten wird. In dieser Situation ist auch das Kunststoffschlauchleitelement 104 in seine Arbeitsstellung gefahren. Hier lenkt es die Folie 4 um und drückt sie gegen die Gegenlage 101 der Haltemittel. Der dabei entstehende Druck wird durch die der Haltestange zugeordnete Spiralfeder bestimmt, da die Haltestange 108 in der Richtung x quer zur Transportrichtung z verschieblich an dem beweglichen Teil 100 der Haltemittel angebracht ist.

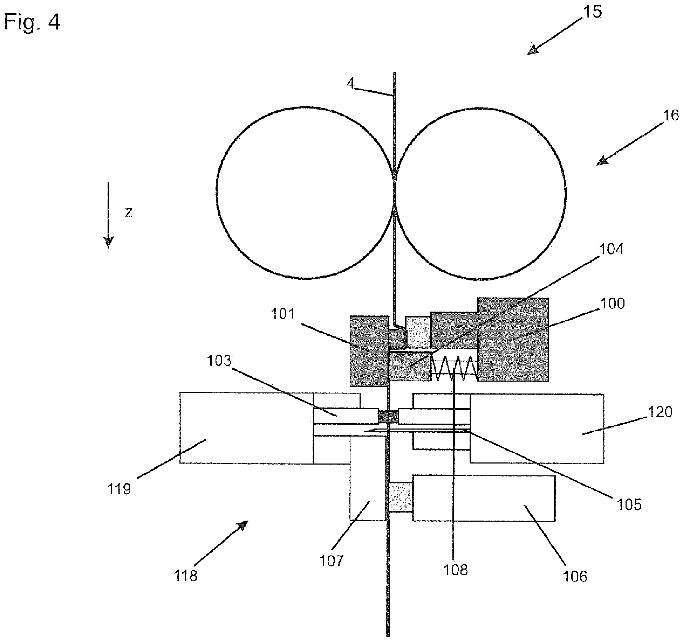

In Figur 4 ist das Ergebnis eines weiteren Arbeitsschritts gezeigt. Durch eine Bewegung der beiden Werkzeugträger 119, 120 und des aktiven Teils der Haltemittel 106 auf die Kunststoffbahn zu, sind die Schweißbacken 102, 103 das Messer 105 sowie die Haltemittel 106, 107 in ihre Arbeitspositionen gefangt.
Als Folge wird die Kunststoffbahn durch Haltemittel 106, 107 gehalten, der Quertrennschnitt wird durchgeführt und der Schweißprozess beginnt.
Der Schweißprozess dürfte in diesem Zusammenhang derjenige Prozess sein, der am meisten Zeit verschlingt, da die von außen auf die Schlauchfolienbahn übertragene Wärme zunächst durch die Kunststoffschichten transportiert werden muss.

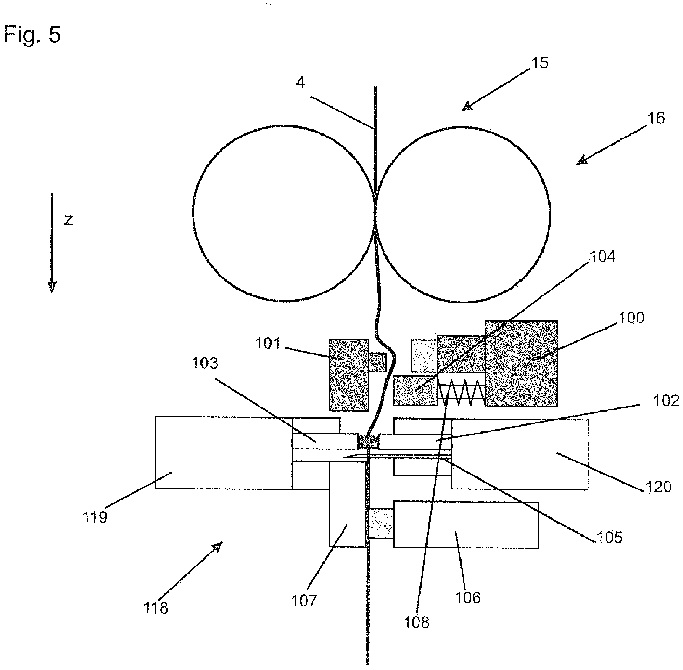

In Figur 5 ist daher die Situation nach dem nächsten Arbeitsschritt dargestellt: der bewegliche Teil 100 der Haltemittel und die Gegenlage 101 der Haltemittel sind auseinander bewegt worden. Auch das Kunststoffschlauchleitelement 104 hat durch diese Bewegung keinen Kontakt mehr zu der Schlauchfolienbahn 4. Daher ist der kürzest mögliche Schlauchfolienbahnweg in Figur 5 kürzer als in den Figuren 3 und 4, in denen gezeigt ist, wie das Schlauchfolienleitelement 104 den Bahnweg verlängert. Aus den genannten Gründen entsteht bei der Situation gemäß Figur 5 eine Lose im Bereich zwischen den Schweißbacken 102, 103 und dem Vorzugswalzenpaar 15, das in dieser Situation als Haltemittel dient.
Durch diese Lose ist es möglich, dass die im Bereich der Schweißbacken 102, 103 mittlerweile durch und durch erhitzte Kunststoffbahn auch dann spannungsfrei bleibt, wenn das gereckte Material im Bereich der Temperatureinwirkung schrumpft. Schäden an dem Kunststoffmaterial 4 werden im Bereich der Schweißung auf diese Weise verhindert.

In der Regel wird es zu dem genannten Zweck erforderlich sein, die Lose in den Schlauchfolienabschnitt einzubringen, nachdem die Haltemittel 15, 100, 101, 106, 107 begonnen haben, die Schlauchfolienbahn zu halten und bevor die Schweißbacken 102, 103 die zum Schweißen nötige Wärme auf die Schlauchfolienbahn übertragen haben und schließlich geöffnet werden.

Ein weiterer sinnvoller Startzeitpunkt für den Beginn des Einbringens der Lose 112, 116 ist wie erwähnt der Beginn des Kontakts zwischen Schweißbacken 102, 103 und Kunststoffschlauchbahn 4, da auch die Schweißbacken die Bahn 4 halten können.

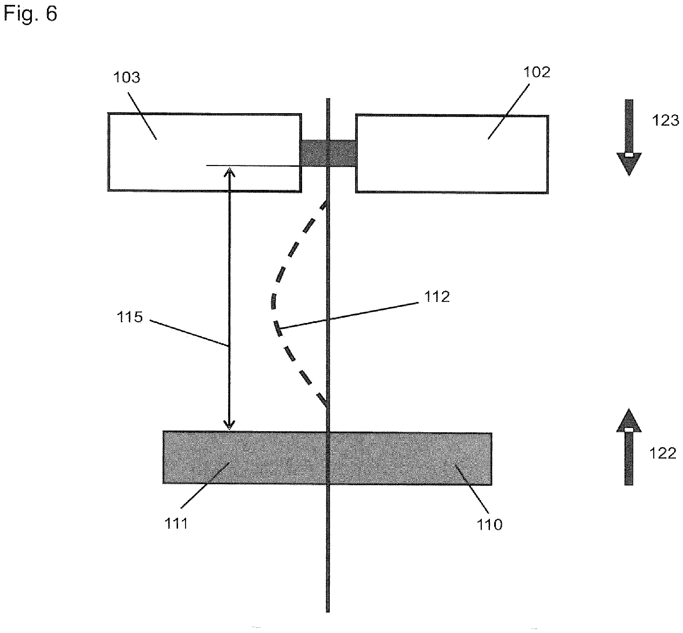

Die Figuren 6 bis 9 zeigen schematischer dargestellte Schweißstationen 26. Trotz der schematischen Darstellungsweise kommen einfachere Stationen - die kaum komplizierter dargestellt werden müssen als die Skizzen in den Figuren 6 bis 9 - oft an FFS-Maschinen als Kopfnahtschweißstation 26 zum Einsatz.
Die Schweißstationen 26 besitzen Schweißbacken 102, 103 und Haltemittel 110 und 111. Durch Figur 6 soll angedeutet werden, dass die kürzest mögliche Wegstrecke der Schlauchfolienbahn oder der Abstand zwischen den Haltemitteln 110 und 111 sowie den Schweißbacken 103, 102 verringert werden kann, indem diese Vorrichtungsbestandteile entlang der Transportrichtung z aufeinander zu bewegt werden (angedeutet durch die Pfeile 122, 123). Diese Relativbewegung zwischen Schweißbacken 103, 102 und Haltemitteln wird in der Regel durch eine Bewegung einer der beiden Funktionseinheiten - relativ zum Rest der Maschine auf die andere Funktionseinheit zu - herbeigeführt werden. Wird eine solche Bewegung herbeigeführt, während sowohl die Schweißbacken als auch die Haltemittel geschlossen sind, entsteht ein loser oder spannungsfreier Bahnabschnitt 112 (Lose), der wieder hilft, Schäden im Bereich der Schweißnaht zu vermeiden.

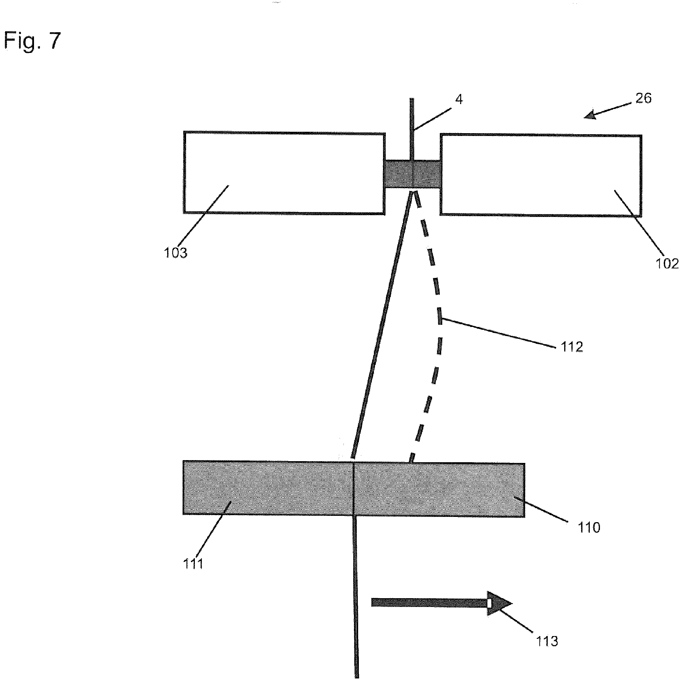

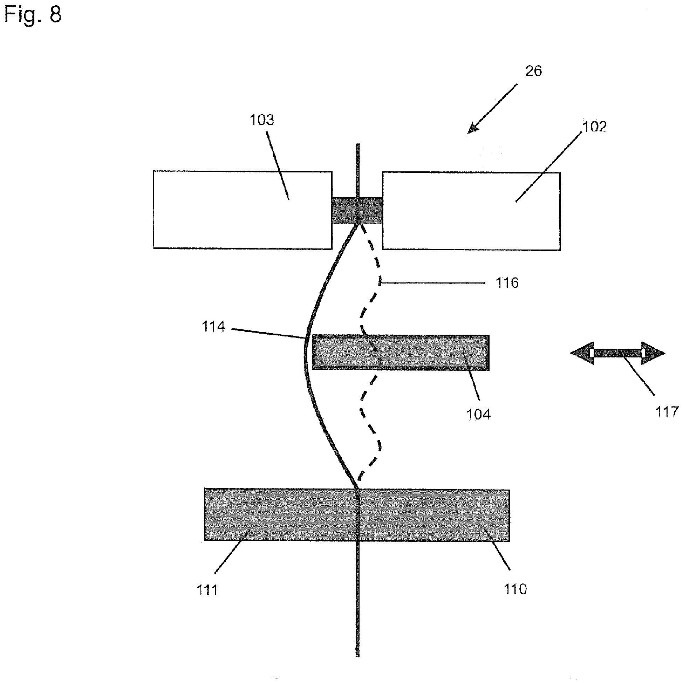

In Figur 7 wird die Lose durch eine Relativbewegung der beiden Funktionseinheiten quer zur Bahntransportrichtung z herbeigeführt (Pfeil 113). In Figur 8 ist eine Schweißstation gezeigt, bei der zunächst ein Kunststoffschlauchleitelement 104 in Kontakt zu der Bahn 4 steht und einen kürzest möglichen Bahnweg herbeiführt, der länger ist als der eigentliche Abstand zwischen der Haltelinie der Haltemittel 110, 111 und dem Ort, an dem die Schweißung entsteht.

Wenn nun zunächst die Haltemittel 110, 111 und die Schweißbacken 102, 103 in ihre die Bahn 4 haftende Arbeitsstellung gebracht werden und dann das Kunststoffschlauchleitelement 104 quer zur Bahn aus der Kontaktstellung mit der Bahn herausgefahren wird, ergibt sich wieder die benötigte Lose 112.

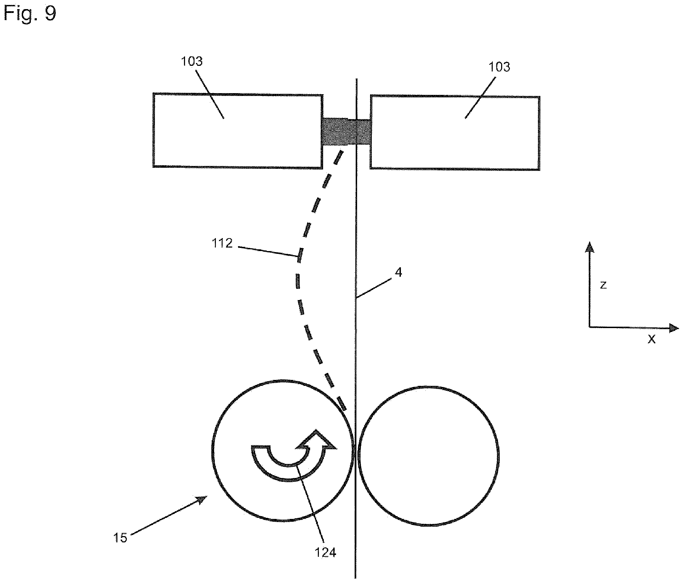

In Figur 9 wird eine solche Lose herbeigeführt, in dem das Vorzugwalzenpaar 15 noch Kunststoffschlauchbahnen in Richtung auf die Schweißbacken fördert, nachdem diese geschlossen sind. Im weiteren Verlauf der Schweißung kann das Vorzugswalzenpaar auch als Haltemittel dienen.

| **Bezugszeichenliste** | |
|---|---|
| 1 | Vorrichtung zum Herstellen und Befüllen von Säcken |
| 2 | Tragarm |
| 3 | Wickel |
| 4 | Folie /Schlauchförmige Folie / Kunststoffschlauch |
| 5 | Transportwalze |
| 6 | Umlenkwalze |
| 7 | Transportwalze |
| 8, 8a | Transportwalze |
| 9 | Hebel |
| 10 | Kolben-Zylinder-Einheit |
| 11 | |
| 12 | |
| 13 | Querschweißstation |
| 14 | Parallelogrammanordnung |
| 15 | Vorschubrollenpaar |
| 16 | Querschneide- und Querschweißstation |
| 17 | Greifer |
| 18 | Schlauchstück |
| 19 | Greifer |
| 20 | Füllstation |
| 21 | Stationärer Greifer |
| 22 | Sauger |
| 23 | Füllstutzen |
| 24 | Transportband |
| 25 | Greifer |
| 26 | Kopf- oder Bodennahtschweißstation |
| 27 | Sack |
| 28 | |
| 29 | Registervorrichtung |
| 30, 32' | Werkzeugträger |
| 33 | Schweißbacken |
| 42 | Querschweißnaht |
| 58 | Stützfläche |
| 59 | Gestrichelte Linie "Höhe (y) Sacköffnung" |
| 61 | Pfeil Abstand Öffnung 62 des Schlauchstückes 18 zur Stützfläche 58 in vertikaler Richtung |
| 70 | Symmetrielinie des Abfüllstutzens 23 |
| 72 | Rüttler |
| 100 | Beweglicher Teil des Haltemittels |
| 101 | Gegenlage des Haltemittels |
| 102 | Schweißbacken |
| 103 | Schweißbacken |
| 104 | Kunststoffschlauchleitelement |
| 105 | Messer |
| 106 | Aktiver Teil des Haltemittels |
| 107 | Gegenlage des Haltemittels |
| 108 | Haltestange mit Spiralfeder |
| 109 | |
| 110 | Haltemittel |
| 111 | Haltemittel |
| 112 | loser Bahnabschnitt |
| 113 | Pfeil in Bewegungsrichtung der Haltemittel 110, 111 |
| 114 | Umgeleiteter Bahnabschnitt |
| 115 | Abstand |
| 116 | Entspannter Bahnabschnitt |
| 117 | Bewegungsrichtung des Kunststoffschlauchleitelements |
| 118 | Schweißvorrichtung |
| 119 | Werkzeugträger |
| 120 | Werkzeugträger |
| 121 | Pfeil |
| 122 | Pfeil Bewegungsrichtung der Haltemittel |
| 123 | Pfeil Bewegungsrichtung der Schweißbacken |
| 124 | Pfeil Drehrichtung der Abzugswalze |

## Patentansprüche

1. Verfahren zum Querschweißen von Kunststoffschläuchen (4),
- bei dem zumindest eine Schweißbacke (102, 103) eingesetzt wird, um die Querschweißnaht herzustellen,
- bei dem zumindest ein Haltemittel (15, 100, 101, 106, 107, 110, 111) eingesetzt wird, um die Kunststoffschlauchbahn entlang einer Haltelinie zu halten,
- wobei sich zwischen der Haltelinie und dem Ort, an dem die Querschweißnaht hergestellt wird, eine Kunststoffschlauchwegstrecke erstreckt,
- wobei in die Kunststoffschlauchwegstrecke zwischen der Haltelinie und dem Ort, an dem die Querschweißnaht hergestellt wird, eine Lose (112, 116) eingebracht wird, bevor der Schweißprozess abgeschlossen ist,
**dadurch gekennzeichnet,**
**dass** in einem ersten Schritt die Folie (4) durch erste Haltemittel (100, 101) gehalten wird, während ein Kunststoffleitelement (104) in seine Arbeitsstellung gefahren ist, wobei die Folie umgelenkt und gegen eine Gegenlage (101) der ersten Haltemittel gedrückt wird, wobei der dabei entstehende Druck durch eine Spiralfeder, die einer Haltestange (108), welche verschieblich in Richtung (x) an dem beweglichen Teil (100) der ersten Haltemittel angebracht ist, zugeordnet ist, bestimmt wird, und
**dass** in einem zweiten Schritt durch eine Bewegung zweier Werkzeugträger (119, 120) und eines aktiven Teils zweiter Haltemittel (106, 107), Schweißbacken (102, 103), ein Messer (105) und zweite Haltemittel (106, 107) in ihre Arbeitsposition gebracht werden, und
**dass** in einem dritten Schritt der bewegliche Teil (100) und die Gegenlage (101) der ersten Haltemittel auseinander bewegt werden, so dass das Kunststoffleitelement (104) außer Kontakt mit der Folie gebracht wird, während der Schweißprozess erfolgt.

2. Verfahren nach Anspruch 1,
**dadurch gekennzeichnet, dass**
die Lose (112, 116) gebildet wird, indem Kunststoffschlauchmaterial (4) in die Kunststoffschlauchwegstrecke zwischen der Haltelinie und dem Ort, an dem die Querschweißnaht hergestellt wird, eingebracht wird, nachdem die Schweißbacken (102, 103), die die Querschweißung vornehmen, in Kontakt mit der Kunststoffschlauchbahn (4) gekommen sind.

3. Verfahren nach Anspruch 2,
**dadurch gekennzeichnet, dass**
als Haltemittel (15, 100, 101, 106, 107, 110, 111) ein Walzenpaar (15) eingesetzt wird und dass der Transport des Kunststoffmaterials (4) in die Kunststoffschlauchwegstrecke zwischen der Haltelinie und dem Ort, an dem die Querschweißnaht hergestellt wird, durch eine Förderbewegung (124) zumindest einer Walze des Walzenpaares (15) vorgenommen wird.

4. Verfahren nach einem der vorstehenden Ansprüche,
**dadurch gekennzeichnet, dass**
die Lose (112, 116) gebildet wird, indem die kürzest mögliche Kunststoffschlauchwegstrecke zwischen der Haltelinie und dem Ort, an dem die Querschweißnaht hergestellt wird, verringert wird, nachdem die Schweißbacken (102, 103) in Kontakt mit der Kunststoffschlauchbahn (4) gekommen sind.

5. Verfahren nach Anspruch 4,
**dadurch gekennzeichnet, dass**
die kürzest mögliche Kunststoffschlauchwegstrecke zwischen der Haltelinie und dem Ort, an dem die Querschweißnaht hergestellt wird, durch eine Relativbewegung der Haltemittel (15, 100, 101, 106, 107, 110, 111) und der Schweißbacken (102, 103) verringert wird.

6. Verfahren nach einem der zwei vorstehenden Ansprüche,
**dadurch gekennzeichnet, dass**
die Relativbewegung durch eine oder mehrere der folgenden Maßnahmen herbeigeführt wird:
- eine Bewegung der Schweißbacken (102, 103) und/oder der Haltemittel (15, 100, 101, 106, 107, 110, 111) in der Richtung (x) quer zur Transportrichtung (z) des Kunststoffschlauchs (4),
- eine Bewegung der Schweißbacken (102, 103) und/oder der Haltemittel (15, 100, 101, 106, 107, 110, 111) in der Richtung (z) längs zur Transportrichtung (z) des Kunststoffschlauchs (4),
eine Bewegung der Schweißbacken (102, 103) und/oder der Haltemittel (15, 100, 101, 106, 107, 110, 111), die Bewegungskomponenten in den Richtungen (x, z) längs und quer zur Transportrichtung (z) des Kunststoffschlauchs (4) enthält.

7. Verfahren nach einem der drei vorstehenden Ansprüche,
**dadurch gekennzeichnet, dass**
die kürzestmögliche Kunststoffschlauchwegstrecke zwischen der Haltelinie und dem Ort, an dem die Querschweißnaht hergestellt wird, verringert wird, indem die Position von Kunststoffschlauchleitelementen (104) im Bereich der vorgenannten Kunststoffschlauchwegstrecke verändert wird.

8. Verfahren nach dem vorstehenden Anspruch,
**dadurch gekennzeichnet, dass**
die Bewegung, mit der die Position der Kunststoffschlauchleitelemente (104) verändert wird, im Wesentlichen quer zu der Transportrichtung (z) der Bahn (4) verläuft.

9. Verfahren einem der vorstehenden Ansprüche,
**dadurch gekennzeichnet,**
- **dass** erste (15, 100, 101) und zweite (106, 107) Haltemittel verwendet werden,
- **dass** die ersten Haltemittel (15, 100, 101) den Schweißbacken (102, 103) in der Transportrichtung (z) des Schlauchfolienmaterials (4) vorgelagert sind,
- **und dass** die zweiten Haltemittel (106, 107) den Schweißbacken (102, 103) in der Transportrichtung (z) des Schlauchfolienmaterials (4) nachgelagert sind.

10. Verfahren einem der vorstehenden Ansprüche,
**dadurch gekennzeichnet, dass**
das Schlauchfolienmaterial (4) in der Transportrichtung (z) des Schlauchfolienmaterials hinter der Schweißnaht durch einen Querschneidevorgang getrennt wird.

11. Verfahren einem der vorstehenden Ansprüche,
**dadurch gekennzeichnet, dass**
die Kopf- und/oder die Bodennaht eines FFS-Sackes (27) durch die Querschweißung gebildet wird.

12. Vorrichtung (1) zum Formen und Verschließen von Säcken (27), mit welcher ein Kunststoffschlauch (4) zu geschlossenen Säcken (27) verarbeitbar ist, zur Durchführung des Verfahrens nach einem der Ansprüche 1 bis 11,
- welche (1) zumindest eine Schweißstation (16, 26) zur Erzeugung von Bodennähten und/oder Kopfnähten enthält,
- welche von einer Steuervorrichtung steuerbar ist,
- wobei die Schweißstation zumindest ein Haltemittel (15, 100, 101, 106, 107, 110, 111) und zumindest einen Schweißbacken (102, 103) aufweist und wobei sich zwischen diesen beiden Elementen (15, 100, 101, 106, 107, 102, 103) eine Kunststoffschlauchwegstrecke erstreckt,
wobei die Vorrichtung Mittel zum Einbringen einer Lose (112, 116) in die Kunststoffschlauchwegstrecke zwischen dem zumindest einen Haltemittel (15, 100, 101, 106, 107, 110, 111) und der zumindest einen Schweißbacken (102, 103) umfasst,
**dadurch gekennzeichnet,**
**dass** in Vorschubrichtung der Kunststofffolie gesehen oberhalb der Schweißbacken angeordnete erste Haltemittel (100, 101), umfassend ein Kunststoffschlauchleitelement (104) vorgesehen sind, mit welchen die Kunststofffolie umlenkbar und gegen eine Gegenlage (101) der ersten Haltemittel andrückbar ist, wobei der dabei entstehende Druck durch eine Spiralfeder, die einer Haltestange (108), welche verschieblich in Richtung (x) an dem beweglichen Teil (100) der ersten Haltemittel angebracht ist, zugeordnet ist, bestimmt ist, und
**dass** zwei bewegbare Werkzeugträger (119, 120) und ein aktiver Teil zweiter Haltemittel (106, 107) vorgesehen sind, mit welchen Schweißbacken (102, 103), ein Messer (105) und zweite Haltemittel (106, 107) in ihre Arbeitsposition bringbar sind, und
**dass** der bewegliche Teil (100) und die Gegenlage (101) der ersten Haltemittel auseinander bewegbar sind, wobei das Kunststoffschlauchleitelement (104) von der Kunststofffolie abstellbar ist, während mit den Schweißbacken die Bodennähte und/oder Kopfnähte erzeugbar sind.

13. Vorrichtung nach dem vorstehenden Anspruch,
**dadurch gekennzeichnet, dass**
die Mittel zum Einbringen einer Lose (112, 116) in die Kunststoffschlauchwegstrecke Vorrichtungen umfassen, die die Relativposition des zumindest einen Haltemittels (15, 100, 101, 106, 107, 110, 111) und des zumindest einen Schweißbackens (102, 103) zueinander verändern.

14. Vorrichtung nach einem der beiden vorstehenden Ansprüche,
**dadurch gekennzeichnet, dass**
- als ein erstes Haltemittel (15, 100, 101, 106, 107) zumindest eine Walze vorgesehen ist, der zumindest ein Aktor zugeordnet ist,
- und dass die Mittel zum Einbringen einer Lose (112, 116) in die Kunststoffschlauchwegstrecke eine Kette von Befehlen enthält, mit welcher die Steuervorrichtung dazu eingestellt wird,
- den Aktor der zumindest einen Walze zum Transport von Folie anzusteuern, nachdem die Schweißbacke (102, 103) und/oder ein zweites Haltemittel (15, 100, 101, 106, 107) den Kunststoffschlauch (4) fixieren.

## Claims

1. A method for the transverse welding of plastic tubes (4),
- in which at least one welding jaw (102, 103) is used, in order to produce the transverse welded seam,
- in which at least one holding means (15, 100, 101, 106, 107, 110, 111) is used, in order to hold the plastic tubular web along a holding line,
- wherein a plastic tube path extends between the holding line and the location, at which the transverse welded seam is produced,
- wherein an internal clearance (112, 116) is introduced into the plastic tube path, between the holding line and the location, at which the transverse welded seam is produced, before the welding process is completed,
**characterized in**
**that** in a first step the film (4) is held by means of first holding means (100, 101), while a plastic guide element (104) is moved into its working position, wherein the film is deflected and is pressed against a counter bearing (101) of the first holding means, wherein the resulting pressure is determined by a spiral spring, which is assigned to a holding rod (108), which is attached displaceably in the direction (x) to the movable part (100) of the first holding means, and
**that** in a second step welding jaws (102, 103), a knife (105) and second holding means (106, 107) are brought into their working position by means of a movement of two tool carriers (119, 120) and an active part of second holding means (106, 107), and
**that** in a third step the movable part (100) and the counter bearing (101) of the first holding means are moved away from one another, so that the plastic guide element (104) is brought out of contact with the film, while the welding process takes place.

2. The method according to claim 1,
**characterized in that**
the internal clearance (112, 116) is formed by introducing plastic tubular material (4) into the plastic tube path between the holding line and the location, at which the transverse welded seam is produced, after the welding jaws (102, 103), which carry out the transverse welding, have come into contact with the plastic tubular web (4).

3. The method according to claim 2,
**characterized in that**
a pair of rollers (15) are used as holding means (15, 100, 101, 106, 107, 110, 111) and that the transport of the plastic material (4) into the plastic tube path between the holding line and the location, at which the transverse welded seam is produced, is carried out by a conveyor movement (124) at least of one roller of the pair of rollers (15).

4. The method according to any one of the preceding claims,
**characterized in that**
the internal clearance (112, 116) is formed, by reducing the shortest possible plastic tube path between the holding line and the location, at which the transverse welded seam is produced, after the welding jaws (102, 103) have come into contact with the plastic tubular web (4).

5. The method according to claim 4,
**characterized in that**
the shortest possible plastic tube path between the holding line and the location, at which the transverse welded seam is produced, is reduced by a relative movement of the holding means (15, 100, 101, 106, 107, 110, 111) and the welding jaws (102, 103).

6. The method according to any one of the two preceding claims,
**characterized in that**
the relative movement is brought about by one or several of the following measures:
- a movement of the welding jaws (102, 103) and/or of the holding means (15, 100, 101, 106, 107, 110, 111) in the direction (x) transverse to the direction of transport (z) of the plastic tube (4),
- a movement of the welding jaws (102, 103) and/or the holding means (15, 100, 101, 106, 107, 110, 111) in the direction (z) along the transport direction (z) of the plastic tube (4),
a movement of the welding jaws (102, 103) and/or the holding means (15, 100, 101, 106, 107, 110, 111), which contains movement components into the directions (x, z) along and transverse to the direction of transport (z) of the plastic tube (4).

7. The method according to any one of the three preceding claims,
**characterized in that**
the shortest possible plastic tube path between the holding line and the location at which the transverse welded seam is produced, is reduced, by changing the position of plastic tube guide elements (104) in the region of the aforementioned plastic tube path.

8. The method according to the preceding claim,
**characterized in that**
the movement, with which the position of the plastic tube guide elements (104) is changed, runs substantially transverse to the direction of transport (z) of the web (4).

9. The method of any one of the preceding claims,
**characterized in**
- **that** first (15, 100, 101) and second (106, 107) holding means are used,
- **that** the first holding means (15, 100, 101) are upstream of the welding jaws (102, 103) in the direction of transport (z) of the tubular film material (4),
- **and that** the second holding means (106, 107) is downstream of the welding jaws (102, 103) in the direction of transport (z) of the tubular film material (4).

10. The method of any one of the preceding claims,
**characterized in that**
the tubular film material (4) is separated by a transverse cutting process in the direction of transport (z) of the tubular film material behind the welding seam.

11. The method of any one of the preceding claims,
**characterized in that**
the head seam and/or the bottom seam of a Form-Fill-Seal (FFS) sack (27) is formed by the transverse welding.

12. A device (1) for forming and closing sacks (27), with which a plastic tube (4) can be processed to form closed sacks (27), for implementing the method according to any one of claims 1 to 11,
- which device (1) contains at least one welding station (16, 26) for producing bottom seams and/or head seams,
- which can be controlled by a control device,
- wherein the welding station has at least one holding means (15, 100, 101, 106, 107, 110, 111) and at least one welding jaw (102, 103) and wherein a plastic tube path extends between these two elements (15, 100, 101, 106, 107, 102, 103),
wherein the device comprises means for introducing an internal clearance (112, 116) into the plastic tube path between the at least one holding means (15, 100, 101, 106, 107, 110, 111) and the at least one welding jaw (102, 103),
**characterized in**
**that,** when viewed in the feed direction of the plastic film, first holding means (100, 101) arranged above the welding jaws, comprising a plastic tube guide element (104) are provided, with which the plastic film can be deflected and can be pressed against a counter bearing (101) of the first holding means, wherein the resulting pressure is determined by a spiral spring, which is assigned to a holding rod (108), which is attached displaceably in the direction (x) to the movable part (100) of the first holding means, and
**that** two movable tool carriers (119, 120) and an active part of second holding means (106, 107) are provided, with which welding jaws (102, 103), a knife (105) and second holding means (106, 107) can be brought into their working position, and
**that** the movable part (100) and the counter bearing (101) of the first holding means can be moved away from one another, wherein the plastic tube guide element (104) can be detached from the plastic film, while the bottom seams and/or head seams can be produced with the welding jaws.

13. The device according to the preceding claim,
**characterized in that**
the means for introducing an internal clearance (112, 116) into the plastic tube path comprise devices, which change the relative position of the at least one holding means (15, 100, 101, 106, 107, 110, 111) and of the at least one welding jaw (102, 103) relative to one another.

14. The device according to any one of the two preceding claims,
**characterized in that**
- at least one roller is provided as a first holding means (15, 100, 101, 106, 107), which is assigned to at least one actuator,
- and that the means for introducing an internal clearance (112, 116) into the plastic tube path contains a chain of commands, with which the control device is set,
- to control the actuator of the at least one roller for transporting film, after which the welding jaws (102, 103) and/or a second holding means (15, 100, 101, 106, 107) fix the plastic tube (4).

## Revendications

1. Procédé de soudage transversal de tuyaux en matière plastique (4),
- dans lequel au moins une mâchoire de soudage (102, 103) est utilisée pour réaliser le cordon de soudage transversal,
- dans lequel au moins un moyen de retenue (15, 100, 101, 106, 107, 110, 111) est utilisé pour retenir la bande de tuyau en matière plastique le long d'une ligne de retenue,
- un parcours de tuyau en matière plastique s'étendant entre la ligne de retenue et l'endroit où le cordon de soudage transversal est réalisé,
- une jeu (112, 116) étant, avant que le processus de soudage soit terminé, introduit dans le parcours de tuyau en matière plastique entre la ligne de retenue et l'endroit où le cordon de soudage transversal est réalisé,
**caractérisé en ce que,**
dans une première étape, la feuille (4) est retenue par des premiers moyens de retenue (100, 101) pendant qu'un élément de guidage de la matière plastique (104) est amené dans sa position de travail, la feuille étant déviée et pressée contre un contre-appui (101) des premiers moyens de retenue, la pression apparaissant à cette occasion étant définie par un ressort hélicoïdal qui est affecté à une tige de retenue (108) qui est mise en place de façon coulissante dans la direction (x) sur la partie (100) mobile des premiers moyens de retenue, et
**en ce que,** dans une deuxième étape, des mâchoires de soudage (102, 103), une lame (105) et des deuxièmes moyens de retenue (106, 107) sont placés dans leur position de travail par un mouvement de deux porte-outils (119, 120) et d'une partie active de deuxièmes moyens de retenue (106, 107), et
**en ce que,** dans une troisième étape, la partie mobile (100) et le contre-appui (101) des premiers moyens de retenue sont écartés l'une de l'autre de telle sorte que l'élément de guidage de la matière plastique (104) est libéré du contact avec la feuille pendant la réalisation du processus de soudage.

2. Procédé selon la revendication 1,
**caractérisé en ce que**
le jeu (112, 116) est formé par le fait que du matériau de tuyau en matière plastique (4) est introduit entre la ligne de retenue et l'endroit où le cordon de soudage transversal est réalisé après que les mâchoires de soudage (102, 103) qui effectuent le soudage transversal sont entrées en contact avec la bande de tuyau en matière plastique (4).

3. Procédé selon la revendication 2,
**caractérisé en ce que,**
en tant que moyen de retenue (15, 100, 101, 106, 107, 110, 111), il est utilisé une paire de cylindres (15), et **en ce que** le transport du matériau de tuyau en matière plastique (4) dans le parcours de tuyau en matière plastique entre la ligne de retenue et l'endroit où le cordon de soudage transversal est réalisé est effectué par un mouvement de transport (124) d'au moins un cylindre de la paire de cylindres (15).

4. Procédé selon l'une des revendications précédentes,
**caractérisé en ce que**
le jeu (112, 116) est formé par le fait que le parcours de tuyau en matière plastique le plus court possible entre la ligne de retenue et l'endroit où le cordon de soudage transversal est réalisé est réduit après que les mâchoires de soudage (102, 103) sont entrées en contact avec la bande de tuyau en matière plastique (4).

5. Procédé selon la revendication 4,
**caractérisé en ce que**
le parcours de tuyau en matière plastique le plus court possible entre la ligne de retenue et l'endroit où le cordon de soudage transversal est réalisé est provoqué par un mouvement relatif des moyens de retenue (15, 100, 101, 106, 107, 110, 111) et des mâchoires de soudage (102, 103).

6. Procédé selon l'une des deux revendications précédentes,
**caractérisé en ce que**
le mouvement relatif est provoqué par une ou plusieurs des mesures suivantes.
- un mouvement des mâchoires de soudage (102, 103) et/ou des moyens de retenue (15, 100, 101, 106, 107, 110, 111) dans la direction (x) transversalement à la direction de transport (z) du tuyau en matière plastique (4),
- un mouvement des mâchoires de soudage (102, 103) et/ou des moyens de retenue (15, 100, 101, 106, 107, 110, 111) dans la direction (z) le long de la direction de transport (z) du tuyau en matière plastique (4),
un mouvement des mâchoires de soudage (102, 103) et/ou des moyens de retenue (15, 100, 101, 106, 107, 110, 111) qui contient des composantes de mouvement dans les directions (x, z) le long de, et transversalement à, la direction de transport (z) du tuyau en matière plastique (4).

7. Procédé selon l'une des trois revendications précédentes,
**caractérisé en ce que**
le parcours de tuyau en matière plastique le plus court possible entre la ligne de retenue et l'endroit où le cordon de soudage transversal est réalisé est réduit par le fait que la position d'éléments de guidage du tuyau en matière plastique (104) est modifiée dans la zone du parcours de tuyau en matière plastique précité.

8. Procédé selon la revendication précédente,
**caractérisé en ce que**
le mouvement avec lequel la position des éléments de guidage du tuyau en matière plastique (104) est modifiée est essentiellement transversal à la direction de transport (z) de la bande (4).

9. Procédé selon l'une des revendications précédentes,
**caractérisé en ce que**
- des premiers moyens de retenue (15, 100, 101) et deuxièmes moyens de retenue (106, 107) sont utilisés,
- les premiers moyens de retenue (15, 100, 101) sont placés en amont des mâchoires de soudage (102, 103) dans la direction de transport (z) du matériau de feuille du tuyau (4),
- et les deuxièmes moyens de retenue (106, 107) sont placés en aval des mâchoires de soudage (102, 103) dans la direction de transport (z) du matériau de feuille du tuyau (4).

10. Procédé selon l'une des revendications précédentes,
**caractérisé en ce que**
le matériau de feuille du tuyau (4) est coupé par un processus de coupe transversale derrière le cordon de soudure dans la direction de transport (z) du matériau de feuille de tuyau.

11. Procédé selon l'une des revendications précédentes,
**caractérisé en ce que**
le cordon de tête et/ou de fond d'un sac FFS (27) est formé par le soudage transversal.

12. Dispositif (1) destiné au formage et à la fermeture de sacs (27), avec lequel un tuyau en matière plastique (4) peut être usiné pour réaliser des sacs (27) fermés, pour la réalisation du procédé selon l'une des revendications 1 à 11,
- lequel (1) contient au moins un poste de soudage (16, 26) destiné à la production de cordons de fond et/ou de cordons de tête,
- lequel poste peut être commandé par un dispositif de commande,
- le poste de soudage comportant au moins un moyen de retenue (15, 100, 101, 106, 107, 110, 111) et au moins une mâchoire de soudage (102, 103), et un parcours de tuyau en matière plastique s'étendant entre ces deux éléments (15, 100, 101, 106, 107, 102, 103),
le dispositif comprenant des moyens destinés à l'introduction d'un jeu (112, 116) dans le parcours de tuyau en matière plastique entre le moyen de retenue (15, 100, 101, 106, 107, 110, 111) au moins au nombre de un et la mâchoire de soudage (102, 103) au moins au nombre de un ;
**caractérisé en ce**
**qu'**il est prévu des premiers moyens de retenue (100, 101) disposés au-dessus des mâchoires de soudage, vu dans la direction d'avance de la feuille en matière plastique, comprenant un élément de guidage du tuyau en matière plastique (104), avec lesquels la feuille en matière plastique peut être déviée et être pressée contre un contre-appui (101) des premiers moyens de retenue, la pression qui apparaît à cette occasion étant définie par un ressort hélicoïdal qui est affecté à une tige de retenue (108) qui est mise en place de façon coulissante dans la direction (x) sur la partie mobile (100) des premiers moyens de retenue, et
**en ce que** deux porte-outils (119, 120) mobiles et une partie active de deuxièmes moyens de retenue (106, 107) sont prévus, avec lesquels des mâchoires de soudage (102, 103), une lame (105) et des deuxièmes moyens de retenue (106, 107) peuvent être amenés dans leur position de travail, et
**en ce que** la partie mobile (100) et le contre-appui (101) des premiers moyens de retenue peuvent être écartés l'une de l'autre, l'élément de guidage du tuyau en matière plastique (104) pouvant être détaché de la feuille en matière plastique tandis que les cordons de fond et/ou les cordons de tête peuvent être produits avec les mâchoires de soudage.

13. Dispositif selon la revendication précédente,
**caractérisé en ce que**
les moyens destinés à la mise en place d'un jeu (112, 116) dans le parcours de tuyau en matière plastique comprennent des dispositifs qui modifient la position relative du moyen de retenue (15, 100, 101, 106, 107, 110, 111) au moins au nombre de un et de la mâchoire de soudage (102, 103) au moins au nombre de un l'un par rapport à l'autre.

14. Dispositif selon l'une des deux revendications précédentes,
**caractérisé en ce que**
- en tant que premier moyen de retenue (15, 100, 101, 106, 107), il est prévu au moins un cylindre auquel est affecté au moins un actionneur,
- et **en ce que** les moyens destinés à introduire un jeu (112, 116) dans le parcours de tuyau en matière plastique contiennent une chaîne d'instructions avec laquelle le dispositif de commande est réglé
- pour piloter l'actionneur du cylindre au moins au nombre de un pour le transport de la feuille après que la mâchoire de soudage (102, 103) et/ou un deuxième moyen de retenue (15, 100, 101, 106, 107) fixent le tuyau en matière plastique (4).
